# FASCICULE DE BREVET EUROPEEN

(11) **EP 1 687 552 B1**
(45) Date de publication et mention de la délivrance du brevet: **12.10.2011**
(21) Numéro de dépôt: 04805472.0
(22) Date de dépôt: 18.11.2004
(51) Int. Cl.: F16H 3/00

(54) **DISPOSITIF DE TRANSMISSION A RAPPORTS MULTIPLES NOTAMMENT POUR L'AUTOMOBILE**
MEHRGANGGETRIEBEVORRICHTUNG, INSBESONDERE FÜR KRAFTFAHRZEUGE
MULTI-SPEED TRANSMISSION DEVICE PARTICULARLY FOR MOTOR VEHICLES

(30) Priorité: 18.11.2003 FR 0313510
(43) Date de publication de la demande: 09.08.2006
(73) Titulaire: Antonov Automotive Technologies Limited, Heathcote Industrial Estate Warwick Warwickshire CV34 6LX (GB)
(72) Inventeur: ANTONOV, Roumen, F-75006 Paris (FR); TOUTAIN, Frédéric, F-60300 Senlis (FR); BENAIS, Cyrille, F-77230 Dammartin-en-Goele (FR)
(74) Mandataire: Pelly, Jason Charles
(86) Numéro de dépôt international: PCT/FR2004/002935
(87) Numéro de publication internationale: WO 2005/050060

(56) Documents cités:
- US-A- 2 981 126
- US-A- 4 468 980
- US-A- 5 584 775
- US-A- 5 735 376
- US-A1- 2003 199 360

## Description

La présente invention concerne un dispositif de transmission à rapports multiples, pour relier un moteur à une charge telle qu'un véhicule automobile.

On connaît un dispositif de transmission de ce type dans lequel un arbre amont, relié au moteur, peut être sélectivement relié avec l'un ou l'autre de deux arbres intermédiaires, au moyen de l'un ou l'autre de deux embrayages. Chaque arbre intermédiaire porte des pignons fous de diamètre différent, avec lesquels il peut être sélectivement accouplé au moyen de dispositifs de crabotage ou de synchronisation. Ces pignons fous sont en prise permanente avec des pignons solidaires d'un arbre secondaire qui est commun pour les deux arbres intermédiaires.

En fonctionnement, un seul pignon fou est craboté sur chaque arbre intermédiaire, mais l'un des deux arbres intermédiaires ne transmet aucune puissance car il tourne indépendamment du moteur en raison du désaccouplement de son embrayage d'entrée.

Pour changer de rapport, des moyens de commande crabotent ou maintiennent craboté sur l'arbre intermédiaire désactivé le pignon fou correspondant au nouveau rapport, puis les moyens de commande ouvrent l'embrayage d'entrée précédemment actif et ferment l'embrayage d'entrée précédemment inactif, lequel assure, simultanément, la variation de vitesse de rotation du moteur pour l'adapter à la vitesse de rotation des roues du véhicule en fonction du nouveau rapport de transmission.

Ce dispositif, récemment installé sur des véhicules de série, a été perçu comme un progrès pour l'utilisateur car le délai de synchronisation du pignon fou qui doit être craboté ou synchronisé avec son arbre intermédiaire ne fait plus partie de la durée de l'interruption de la transmission de puissance entre le moteur et les roues du véhicules.

Toutefois, il est considéré selon l'invention que cet avantage est obtenu au prix d'inconvénients excessifs.

En particulier, le dispositif nécessite deux embrayages d'entrée au lieu d'un seul, deux arbres intermédiaires, une complexité très importante de la commande, une grande longueur axiale du dispositif avec quasiment aucune souplesse de conception spatiale, un poids très élevé, un coût prohibitif.

En outre, le dispositif connu ne permet pas directement le changement entre deux rapports de transmission qui sont définis par des pignons fous portés par le même arbre intermédiaire.

On connaît d'après le US 2003/199360 un dispositif générique comprenant plusieurs trajets de puissance en parallèle équipés chacun d'un embrayage d'entrée pour activer ou désactiver le trajet, et de synchroniseurs pour sélectionner le rapport de transmission dans ce trajet. Là encore, on présélectionne le nouveau rapport de transmission dans un trajet dont l'embrayage se ferme juste après ouverture de l'embrayage d'entrée du trajet de puissance précédemment actif.

Ce dispositif connu a sensiblement le même type de fonctionnement, et les mêmes inconvénients que celui discuté précédemment.

Par ailleurs, on voit actuellement apparaître des transmissions automatiques traditionnelles, c'est-à-dire comportant une succession axiale de trains épicycloïdaux, comportant de plus en plus de rapports, actuellement jusqu'à sept rapports disponibles. Ce type de transmission pose également un problème d'encombrement, de poids, de complexité, de coût, et de difficulté d'installation dans certains types de véhicules, notamment à traction avant et en particulier à moteur transversal.

Le but de l'invention est de remédier au moins en partie à ces inconvénients et ainsi de proposer un dispositif de transmission pouvant être plus simple à concevoir et/ou à commander, moins encombrant et/ou plus facile à configurer dans l'espace, plus facile à automatiser, offrant plus de souplesse de commande.

Suivant l'invention, le dispositif de transmission à rapports multiples, pour relier un moteur à une charge telle qu'un véhicule automobile, comprenant :
- un arbre amont,
- un arbre aval,
- reliés l'un à l'autre par au moins deux trajets de puissance définissant des rapports de transmission différents, les rapports étant différents d'un trajet à l'autre entre l'arbre amont et l'arbre aval,
- sur chaque trajet de puissance, des moyens d'activation sélective pour activer et désactiver individuellement chaque rapport déterminé, et
- des moyens pour désactiver l'au moins un trajet autre que celui définissant le rapport établi entre l'arbre amont et l'arbre aval, et dans lequel la liaison entre l'arbre amont et un organe d'entrée respectif de chacun des trajets de puissance est permanente, est caractérisé en ce que:
   - sur chaque trajet de puissance, chaque rapport déterminé est activé par un moyen d'activation sélective spécifique à ce rapport, regroupant la fonction d'activation et de désactivation de ce rapport et la fonction d'adaptation des vitesses entre l'arbre amont et l'arbre aval lors des changements de rapport ; et
   - la désactivation du trajet de puissance s'effectue en mettant simultanément l'ensemble des moyens d'activation sélective appartenant à ce trajet en état de désactivation individuelle de tous les rapports déterminés de ce trajet.

Suivant l'invention, on regroupe en un même moyen d'activation sélective, pour un rapport, la fonction d'activation de ce rapport et la fonction d'adaptation des vitesses entre l'arbre amont et l'arbre aval du dispositif de transmission.

Ainsi, il n'y a plus qu'une seule liaison qui soit activée pour tous les trajets de puissance, à chaque instant, contrairement au dispositif antérieur où deux liaisons étaient réalisées sur deux arbres intermédiaires différents, mais une seule étant validée par l'embrayage d'entrée correspondant.

Suivant l'invention, le séquence de commande est simplifiée, elle correspond à une séquence usuelle dans les transmissions automatiques connues, typiquement avec désactivation d'un moyen d'accouplement à friction tel qu'un frein ou un embrayage et activation synchronisée d'un autre moyen d'accouplement à friction.

En outre, suivant l'invention, il est indifférent que le nouveau rapport de transmission soit réalisé sur le même trajet de puissance que l'ancien rapport, ou sur un autre trajet.

D'autres particularités et avantages de l'invention ressortiront encore de la description ci-après, relative à des exemples non limitatifs.

Aux dessins annexés :
- la figure 1 est un schéma de principe du dispositif de transmission selon l'invention ;
- la figure 2 est schéma de principe analogue à la figure 1, mais légèrement précisé ;
- la figure 3 est une vue générale schématique d'un exemple de dispositif de transmission selon l'invention ;
- la figure 4 est un schéma du dispositif selon la figure 3, vu en bout ; et
- la figure 5 est un schéma d'un autre mode de réalisation du dispositif selon l'invention.

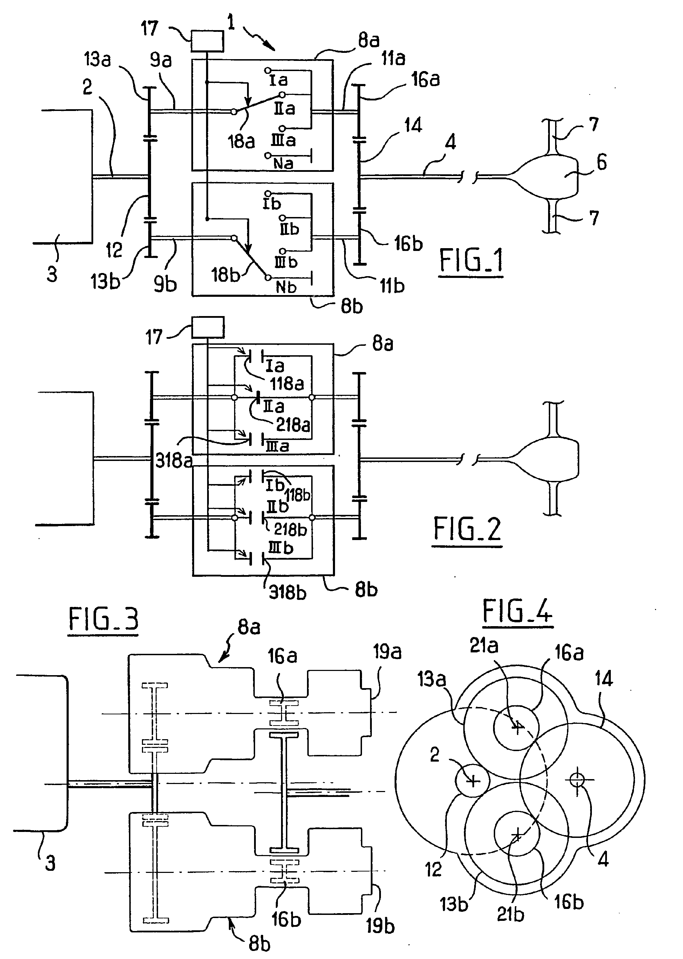

Dans l'exemple représenté à la figure 1, le dispositif de transmission 1 est installé fonctionnellement entre un arbre amont 2 qui dans l'exemple est l'arbre de puissance d'un moteur d'automobile 3, et un arbre aval 4 qui dans l'exemple est représenté comme l'arbre d'entrée dans un différentiel 6 dont les arbres de sortie sont les arbres de roue 7 du véhicule.

Le dispositif de transmission 1 relie l'arbre amont 2 avec l'arbre aval 4 par deux trajets de puissance 8a, 8b montés mécaniquement en parallèle. Il y a une liaison mécanique permanente entre l'arbre amont 2 et un organe rotatif d'entrée 9a du trajet 8a ainsi qu'entre l'arbre amont 2 et un organe rotatif d'entrée 9b du trajet 8b.

De même, un organe rotatif de sortie 11a du trajet 8a et un organe rotatif de sortie 11b du trajet 8b sont reliés mécaniquement de manière permanente avec l'arbre aval 4.

Dans l'exemple représenté à la figure 1, ces liaisons permanentes sont réalisées par un pignon 12 solidaire de l'arbre amont 2, engrenant avec des pignons d'entrée 13a, 13b solidaires en rotation de l'organe d'entrée 9a et respectivement 9b, et par un pignon 14 solidaire de l'arbre aval 4 et engrenant avec des pignons de sortie 16a, 16b solidaires en rotation de l'organe de sortie 11a et respectivement 11b.

Dans l'exemple représenté, les pignons d'entrée 13a et 13b sont de diamètre différent pour que le rapport de transfert entre l'arbre amont 2 et l'organe d'entrée 9a dans le premier trajet de puissance 8a soit différent du rapport de transfert entre l'arbre amont 2 et l'organe d'entrée 9b dans le deuxième trajet de transmission de puissance 8b. Au contraire, les pignons de sortie 16a et 16b sont de même diamètre. Cette solution permet de réaliser des rapports de transmission différents dans le premier trajet de puissance 8a et dans le deuxième trajet puissance 8b même si ceux-ci sont identiques comme le suggère l'exemple représenté à la figure 1. On verra toutefois plus loin que la particularité relative aux rapports de transfert différents présente également un intérêt dans des cas où les deux trajets de transmission de puissance ne sont pas identiques. En variante, les pignons d'entrée 13a, 13b peuvent être de diamètre identique et les pignons de sortie 16a et 16b de diamètre différent. Il est également possible que les pignons d'entrée et les pignons de sortie présentent des diamètres différents.

La figure 1 illustre par une analogie avec un commutateur électrique à plusieurs positions, que chacun des trajets de transmission de puissance 8a et 8b offre la possibilité de choisir entre trois rapports de transmission différents indiqués Ia, IIa, IIIa et un point mort Na, et respectivement Ib, IIb, IIIb et Nb.

On appelle dans la suite "rapport local de transmission" le rapport de vitesse entre l'entrée et la sortie d'un trajet de transmission de puissance 8a ou 8b. Le rapport de transmission du dispositif de transmission dans un état de fonctionnement donné correspond au rapport local dans le trajet 8a ou 8b qui n'est pas en position de point mort, tel que modifié par le rapport de transfert amont créé par le pignon amont 12 avec le pignon d'entrée 13a ou 13b et le rapport de transfert aval créé par le pignon de sortie 16a ou 16b avec le pignon aval 16.

Les rapports locaux des deux trajets 8a, 8b peuvent être identiques d'un trajet à l'autre, car les rapports globaux seront tout de même différents grâce aux rapports de transfert différents. En particulier, les deux trajets de transmission de puissance 8a et 8b peuvent tous les deux comporter, en tant qu'un de leurs rapports de transmission locaux, un rapport de prise directe.

Les deux trajets de transmission de puissance 8a, 8b sont soumis à un dispositif de commande commun 17 qui synchronise les changements de rapport dans les deux trajets de transmission de puissance 8a, 8b.

Le dispositif de commande 17 agit, dans la représentation très schématique de la figure 1, sur un moyen d'activation sélective 18a du trajet 8a et 18b du trajet 8b. En prenant l'exemple du trajet 8a, le moyen 18a relie sélectivement l'organe d'entrée 9a avec l'un des trois chemins mécaniques Ia, IIa, IIIa conduisant à l'organe de sortie 11a avec un rapport local différent, ou encore avec la position de point mort Na correspondant à une coupure de la transmission entre l'organe d'entrée 9a et l'organe de sortie 11a. La fonction du moyen d'activation sélective 18b dans le trajet 8b est la même que celle qu'on vient décrire pour le moyen 18a, à condition de remplacer les indices (a) des références par des indices (b).

On va maintenant décrire le fonctionnement du dispositif selon l'invention dans l'exemple très général de la figure 1.

Pour mettre le dispositif de transmission 1 au point mort, les deux moyens d'activation 18a, 18b sont sur leurs positions de point mort Na et respectivement Nb.

Pour relier l'arbre amont 2 avec l'arbre aval 4 avec un rapport global de transmission correspondant à l'un des six possibles, on place le moyen d'activation 18a ou 18b du trajet 8a ou 8b auquel est associé ce rapport voulu, sur la position voulue, par exemple IIa dans l'exemple de fonctionnement de la figure 1 dans le trajet 8a, et le moyen d'activation, 18b dans l'exemple de situation représenté à la figure 1, de l'autre trajet de transmission, 8b dans le même exemple, dans sa position de point mort Nb correspondante. Ainsi, dans l'exemple, la puissance est transmise via le trajet de transmission 8a avec le rapport global voulu et le trajet 8b est inactif.

Comme on le verra dans les exemples plus précis qui suivent, chaque moyen d'activation sélective 18a ou 18b n'est pas un simple crabot ou synchroniseur que ne serait capable que d'être engagé et désengagé hors charge, mais un moyen d'accouplement, typiquement par friction et plus particulièrement multi-disques à bain d'huile, capable de modifier la vitesse de rotation de l'arbre du moteur en fonction de celle des roues du véhicule lors des changements de rapports, et capable également, au moins pour un rapport de démarrage du véhicule (par exemple Ia), de faire commencer la rotation de l'arbre aval 4 et donc l'avancement du véhicule à partir d'une situation où le véhicule est l'arrêt.

Lors d'un changement de rapport, le nouveau rapport à enclencher correspond typiquement à la mise à l'état de point mort du trajet de transmission de puissance initialement actif, et à l'activation d'un rapport dans le trajet de puissance initialement à l'état de point mort. Le dispositif de commande 17 synchronise les actionnements des deux moyens d'activation 18a, 18b pour minimiser les à-coups et la durée de l'interruption de transmission de la puissance aux roues du véhicule. Au besoin, le dispositif de commande 17 peut également être relié à la gestion électronique du moteur 3 pour réguler la puissance du moteur pendant le processus de changement de rapport.

Il est également possible qu'un processus de changement de rapport consiste à passer d'un rapport local à l'autre dans un même trajet de transmission de puissance, l'autre trajet de transmission de puissance demeurant au point mort.

L'exemple représenté à la figure 2 ne diffère de celui représenté à la figure 1 qu'en ce que les moyens d'activation sélective 18a et 18b ont été remplacés par un moyen spécifique pour chaque rapport local réalisable, à savoir 118a, 218a, 318a, 118b, 218b, 318b. Ces moyens d'activation sont représentés comme des moyens d'accouplement, toujours à titre illustratif. La position de point mort n'apparaît plus car elle est réalisée par la mise à l'état désaccouplé des trois moyens d'activation sélective d'un même trajet de transmission de puissance, par exemple 8b dans l'exemple représenté.

Le dispositif de commande 17 détermine l'état de chacun des moyens d'activation sélective de façon que lorsque le véhicule est en marche il y ait toujours l'un des moyens d'activation sélective qui soit à l'état accouplé et tous les autres à l'état désaccouplé, le changement de rapport se faisant en désaccouplant le moyen d'activation jusqu'à présent accouplé et en faisant passer à l'état accouplé, de manière synchronisée, un autre des moyens d'activation, précédemment désaccouplé. La désactivation de l"'ancien" moyen d'activation peut être progressive pendant l'activation progressive du "nouveau" moyen d'activation de façon que le conducteur du véhicule ne sente aucune interruption de la transmission de puissance aux roues du véhicule.

Dans les deux exemples qui viennent d'être décrits, et dans les suivants, les deux trajets de transmission de puissance 8a et 8b sont cinématiquement indépendants l'un de l'autre, hormis bien entendu le fait que leurs organes d'entrée 9a, 9b engrènent avec le même pignon amont 12 et que leurs organes de sortie 11a, 11b engrènent avec le même pignon 14 de l'arbre aval 4. Cette particularité distingue l'invention du dispositif de transmission antérieur où les deux trajets de puissance passent par le même arbre secondaire.

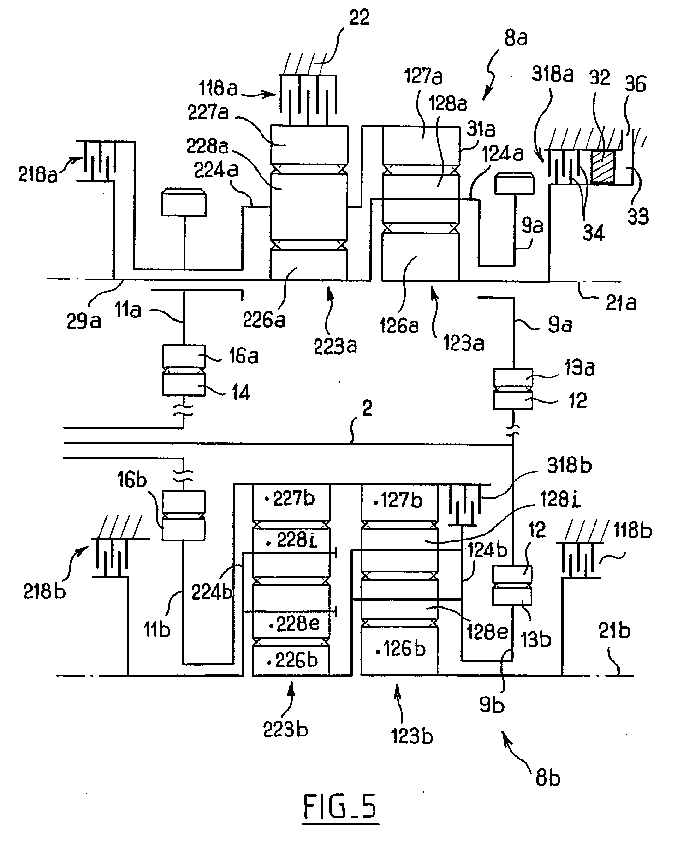

Dans l'exemple représenté à la figure 3, chaque trajet de transmission de puissance 8a ou 8b comprend un mécanisme à trains planétaires par exemple du type qui sera décrit en détail plus loin en référence à la figure 5.

Dans cet exemple, on exploite la possibilité offerte par ce type de mécanisme pour placer les pignons de sortie 16a, 16b à distance de l'extrémité spatiale 19a, 19b du mécanisme. Ceci est avantageux pour certains cas d'implantation du groupe moto-propulseur où il faut minimiser la distance entre l'extrémité avant du moteur (extrémité gauche non représentée à la figure 3) et le site de sortie du dispositif de transmission.

La figure 4 illustre la possibilité de disposer aux angles d'un quadrilatère l'arbre moteur ou arbre amont 2, l'arbre aval 4 en position diagonalement opposée, et les deux axes géométriques 21a et 21b, diagonalement opposés eux aussi, des deux trajets 8a et 8b.

Dans la représentation de la figure 5, on ne voit que la moitié supérieure du trajet 8a et la moitié supérieure du trajet 8b. Dans ce mode de réalisation, les trajets 8a et 8b sont de structure différenciée pour permettre un meilleur étagement des rapports de transmission de l'ensemble du dispositif de transmission.

Dans l'exemple représenté à la figure 5, le trajet de puissance 8a comprend autour d'un même axe géométrique commun 21a et dans un carter 22 (partiellement représenté), un premier train épicycloïdal 123a et un deuxième train épicycloïdal 223a, qui comprennent respectivement :
- un premier et un deuxième porte-satellites 124a, 224a,
- une première et une deuxième roue planétaire 126a, 226a,
- une première et une deuxième couronne dentée intérieurement 127a, 227a.

Les porte-satellites 124a, 224a, portent avec possibilité de rotation des satellites 128a, 228a, excentrés par rapport à l'axe général 21a, et dont chacun engrène avec la roue planétaire correspondante 126a ou 226a et la couronne dentée correspondante 127a ou 227a.

Le premier porte-satellites 124a est solidaire de l'organe d'entrée 9a et de la deuxième roue planétaire 226a. L'organe de sortie 11a est solidaire du deuxième porte-satellites 224a et de la première couronne 127a.

Les moyens d'activation sélective comprennent :
- un frein 118a associé à la deuxième couronne 227a, pour immobiliser sélectivement cette dernière ;
- un embrayage 218a qui solidarise le deuxième porte-satellites 224a et la deuxième roue planétaire 226a, reliés l'un à l'organe de sortie 11a et l'autre à l'organe d'entrée 9a ; et
- un frein 318a pour immobiliser sélectivement la première roue planétaire 126a, de façon à donner à la première couronne 127a et ainsi à l'organe de sortie 11a une vitesse qui est surmultipliée d'un certain rapport par comparaison avec la vitesse de l'organe d'entrée 9a.

La sortie 11a avec sa roue dentée de sortie 16a sont situées entre d'une part les deux trains planétaires 123a, 223a et d'autre part le moyen d'accouplement sélectif 218a et 318a. L'organe de sortie 11a est tubulaire et entoure un arbre 29a reliant l'embrayage 218a avec la deuxième roue planétaire 226a. Il est visible d'après le dessin qu'on aurait pu également placer la sortie 11a entre les trains planétaires, ou même encore prolonger la première couronne 127a vers la droite au-delà de son extrémité actuelle 31a pour qu'elle y porte le pignon de sortie 16a qui serait ainsi juxtaposé axialement au pignon d'entrée 13a près d'une extrémité axiale du trajet.

Les moyens d'activation sélective 118a, 218a, 318a, sont actionnés chacun par un piston hydraulique 32 (voir moyen d'activation 218a) de forme annulaire autour de l'axe général 21a, piston derrière lequel est formée une chambre annulaire 33 pour l'huile sous pression, du côté opposé aux disques 34. Pour les deux moyens d'activation 118a et 318a qui sont des freins, l'huile sous pression est amenée dans la chambre 33 correspondante par des canaux 36 du carter. Pour le moyen d'activation 218a qui est un embrayage, l'huile sous pression arrive dans la chambre (non représentée) correspondante par un conduit (non représenté) formé dans l'arbre 29a.

Avec l'architecture générale qui vient d'être décrite, le premier rapport local, qui est un rapport de démultiplication (réduction), est réalisé en activant le frein 118a, donc en immobilisant la seconde couronne 127a, et la puissance est transmise de l'organe d'entrée 9a à l'organe de sortie 11a par le deuxième train épicycloïdal 223a. Le frein 318a et l'embrayage 218a sont relâchés et les organes dentés 126a, 127a, 128a du premier train planétaire 123a tournent fous.

Pour la réalisation du deuxième rapport local, qui est un rapport de prise directe locale, les deux freins 118a, 318a sont relâchés et l'embrayage 218a est serré, de sorte que la puissance est transmise par l'embrayage 218a de l'organe d'entrée 9a à l'organe de sortie 11a tandis que tous les organes dentés 126a, 127a, 128a, 226a, 227a, 228a tournent fous.

Pour le troisième rapport local, l'embrayage 218a est relâché et le frein 318a serré, le frein 118a étant toujours relâché. C'est désormais la première roue planétaire 126a qui est immobilisée et la puissance est transmise de l'organe d'entrée 9a à l'organe de sortie 11a par l'intermédiaire du premier train épicycloïdal 123a fonctionnant en surmultiplicateur, c'est-à-dire faisant tourner l'organe de sortie 11a à plus grande vitesse que l'organe d'entrée 9a. Les organes dentés 226a, 227a, 228a du second train planétaire 223a tournent fous.

Dans le trajet 8b, on retrouve là encore deux trains épicycloïdaux 123b et 223b mais les satellites sont montés par paires 128i et 128e, 228i et 228e, chaque paire formant une cascade entre la roue planétaire 126b ou 226b et la couronne 127b ou 227b.

Les deux couronnes 127b et 227b sont solidaires l'une de l'autre et de l'organe de sortie 11b. Le premier porte-satellites 124b est solidaire de l'organe d'entrée 9b et de la deuxième roue planétaire 226b.

Pour la réalisation du premier rapport de transmission local, un frein 118b immobilise sélectivement la première roue planétaire 126b. Pour la réalisation du deuxième rapport de transmission local, un frein 218b immobilise sélectivement le deuxième porte-satellites 224b.

Pour la réalisation du troisième rapport de transmission local, qui est un rapport de prise directe, un embrayage 318b relie sélectivement l'un à l'autre l'organe d'entrée 9b et l'organe de sortie 11b.

Avec ce dispositif de transmission, et avec un rapport de transfert plus réducteur entre l'arbre amont 2 et l'organe d'entrée 9a dans le premier trajet 8a qu'entre l'arbre amont 2 et l'organe d'entrée 9b dans le deuxième trajet 8b, on obtient la combinaison suivante, par exemple :
- premier rapport global avec le premier rapport local du premier trajet 8a ;
- deuxième rapport global avec le premier rapport local du deuxième trajet 8b ;
- troisième rapport global avec le deuxième rapport local du deuxième trajet 8b ;
- quatrième rapport global avec la prise directe locale du premier trajet 8a ;
- cinquième rapport global avec la prise directe locale du deuxième trajet 8b ; et
- sixième rapport avec le troisième rapport local (surmultipliée) du premier trajet 8a.

Dans ce mode de réalisation, les deux trains épicycloïdaux 123a, 223a et l'embrayage 218a du trajet 8a sont trois sous-trajets qui sont fonctionnellement en parallèle et activés à tour de rôle, entre l'élément d'entrée 9a et l'élément de sortie 11a. De même, les deux trains planétaires 123b, 223b et l'embrayage 218b du second trajet 8b sont trois sous-trajets montés fonctionnellement en parallèle entre l'élément d'entrée 9b et l'élément de sortie 11b. Chaque sous-trajet est activé et désactivé par accouplement et respectivement désaccouplement d'un seul moyen d'accouplement.

La structure d'un dispositif de transmission avec trois sous-trajets tels que deux trains épicycloïdaux et un embrayage dans lequel chaque rapport de l'ensemble de la structure est obtenu par activation d'un seul moyen d'accouplement sélectif, est particulièrement avantageuse dans le cadre de l'invention car la commande de chaque trajet de puissance 8a ou 8b est ainsi considérablement simplifiée, ce qui simplifie également la synchronisation des commandes appliquées aux deux trajets 8a et 8b.

Plus particulièrement, pour passer d'un rapport de transmission à un autre, il suffit de relâcher un moyen d'activation tel que 118, 218 ou 318, et d'activer un autre tel moyen d'activation, qu'il soit dans le même trajet ou dans l'autre trajet.

Bien entendu, l'invention n'est pas limitée aux exemples décrits et représentés.

On pourrait prévoir plus de deux trajets de transmission de puissance.

Par exemple, un troisième trajet pourrait être constitué par une prise directe entre l'arbre amont 2 et l'arbre aval 3.

On peut réaliser des trajets tels que 8a et 8b, mais encore plus faciles à commander avec seulement un frein pour chaque rapport local, c'est-à-dire absence totale d'embrayages. Toutefois, l'organe freiné jouant systématiquement le rôle d'organe de réaction sur lequel prend appui un autre organe denté, il n'y a plus de rapport de prise directe locale.

## Revendications

1. - Dispositif de transmission à rapports multiples, pour relier un moteur à une charge telle qu'un véhicule automobile, comprenant :
- un arbre amont (2),
- un arbre aval (4),
- reliés l'un à l'autre par au moins deux trajets de puissance (8a, 8b) dont l'un au moins définit au moins deux rapports de transmission, les rapports étant différents d'un trajet à l'autre entre l'arbre amont et l'arbre aval,
- sur chaque trajet de puissance, des moyens d'activation sélective (18a, 18b ; 118a, 218a, 318a, 118b, 218b, 318b) pour activer et désactiver individuellement chaque rapport déterminé ; et
- des moyens pour désactiver en termes de transmission de puissance l'au moins un trajet autre que celui définissant le rapport de transmission établi entre l'arbre amont et l'arbre aval ;
et dans lequel la liaison entre l'arbre amont (2) et un organe d'entrée respectif (9a, 9b) de chacun des trajets de puissance (8a, 8b) est permanente, **caractérisé en ce que** :
- sur chaque trajet de puissance, chaque rapport déterminé est activé par un moyen d'activation sélective spécifique à ce rapport, regroupant la fonction d'activation et de désactivation de ce rapport et la fonction d'adaptation des vitesses entre l'arbre amont et l'arbre aval lors des changements de rapport ; et
- la désactivation du trajet de puissance s'effectue en mettant simultanément l'ensemble des moyens d'activation sélective appartenant à ce trajet, en état de désactivation individuelle de tous les rapports déterminés de ce trajet.

2. - Dispositif selon la revendication 1, **caractérisé en ce que** les moyens d'activation sélective sont des moyens d'accouplement par friction multi-disques à bain d'huile (118, 218, 318).

3. - Dispositif selon la revendication 1 ou 2, **caractérisé en ce que** certains au moins des moyens d'activation sélective sont des freins (118, 218 ; 118a, 318a, 118b, 218b) qui relient sélectivement un organe de réaction à un carter (22) du dispositif de transmission.

4. - Dispositif selon l'une des revendications 1 à 3, **caractérisé en ce que** chaque trajet de puissance (8a, 8b) est cinématiquement indépendant et comprend un organe de sortie (11a, 11b) relié de manière permanente à l'arbre aval (4).

5. - Dispositif selon l'une des revendications 1 à 4, **caractérisé en ce que** les deux trajets de puissance (8a, 8b) sont sensiblement identiques et sont capables de réaliser entre leur organe d'entrée (9a, 9b) et leur organe de sortie (11a, 11b) des rapports de transmission locaux identiques, mais sont reliés à l'arbre amont (2) et/ou à l'arbre aval (4) avec un rapport de transfert différent.

6. - Dispositif selon l'une des revendications 1 à 5, **caractérisé en ce que** chaque trajet de puissance (8a, 8b) est capable d'un rapport local de prise directe.

7. - Dispositif selon l'une des revendications 1 à 6, **caractérisé en ce que** chaque moyen d'activation sélective peut être mis dans un état de point mort, de sorte que chaque rapport de transmission d'un trajet de puissance est réalisé par mise en état d'activation d'un seul moyen d'activation, tandis qu'un point mort du trajet de puissance est réalisé lorsque tous les moyens d'activation sélective du trajet de puissance sont en état de point mort.

8. - Dispositif selon l'une des revendications 1 à 7, **caractérisé en ce qu'**au moins un trajet de puissance (8a, 8b) comprend des sous-trajets correspondant chacun à un rapport de transmission local et qui sont montés mécaniquement en parallèle entre l'organe d'entrée (9a, 9b) et l'organe de sortie (11a, 11b) du trajet.

9. - Dispositif selon l'une des revendications 1 à 8, **caractérisé en ce que** l'un au moins des trajets de puissance comporte au moins un train planétaire (123a, 223a ; 123b, 223b).

10. - Dispositif selon l'une des revendications 1 à 8, **caractérisé en ce que** l'un au moins (8b) des trajets de puissance comprend un premier et un deuxième train épicycloïdal (123b, 223b), comprenant respectivement :
- un premier et un deuxième porte-satellites (124b, 224b), dont les satellites sont montés par paires (128i, 128e ; 228i, 228e) en cascade,
- une première et une deuxième roue planétaire (126b, 226b),
- une première et une deuxième couronne (127b, 227b),
**en ce que** :
- les deux couronnes (127b, 227b) sont solidaires de l'organe de sortie (11b),
- le premier porte-satellites (124b) et la deuxième roue planétaire (226b) sont solidaires de l'organe d'entrée (9b),
et **en ce que** les moyens d'activation sélective comprennent :
- un frein (118b) pour la première roue planétaire (126b),
- un frein (218b) pour le deuxième porte-satellites (224b),
- un embrayage de prise directe (318b).

11. - Dispositif selon l'une des revendications 1 à 8 ou 10, **caractérisé en ce que** l'un au moins (8a) des trajets de puissance comprend un premier et un deuxième train épicycloïdal (123a, 223a), comprenant respectivement
- un premier et un deuxième porte-satellites (124a, 224a),
- une première et une deuxième roue planétaire (126a, 226a),
- une première et une deuxième couronne (127a, 227a), **en ce que** :
- la première couronne (127a) et le deuxième porte-satellites (224a) sont solidaires de l'organe de sortie (11a),
- le premier porte-satellites (124a) et la deuxième roue planétaire
(226a) sont solidaires de l'organe d'entrée (9a),
et **en ce que** les moyens d'activation sélective comprennent :
- un frein (118a) pour la deuxième couronne (227a),
- un frein (318a) pour la première roue planétaire (126a),
- un embrayage (218a) de prise directe.

12. - Dispositif selon l'une des revendications 1 à 11, **caractérisé en ce que** l'un au moins des organes d'entrée (9a) et de sortie (11a) de chaque trajet (8a) est situé en position intermédiaire entre les extrémités spatiales du trajet.

13. - Dispositif selon l'une des revendications 1 à 11, **caractérisé en ce que** l'organe de sortie et l'organe d'entrée de chaque trajet sont axialement voisins, en particulier à une extrémité spatiale du trajet.

14. - Dispositif selon l'une des revendications 1 à 13, **caractérisé en ce qu'**il comprend des moyens de commande (17) capables de synchroniser la mise progressive d'un moyen d'activation sélective à l'état de point mort avec la mise progressive d'un autre moyen d'activation sélective à l'état activé.

## Claims

1. A multiple gear ratio transmission device, adapted to connect an engine to a load such as a motor vehicle, comprising:
- an upper shaft (2),
- a lower shaft (4),
- connected to each other by at least two power paths (8a, 8b), at least one of which defines at least two gear ratios, the gear ratios differing from one path to another between the upper shaft and the lower shaft,
- on each power path, selective activators (18a, 18b; 118a, 218a, 318a, 118b, 218b, 318b) to activate and deactivate each determined gear ratio individually and means for deactivating in terms of power transmission at least one path other than the path defining the determined gear ratio between the upper shaft and the lower shaft
and wherein the connection between the upper shaft (2) and a respective input unit (9a, 9b) of each of the power paths (8a, 8b) is permanent; **characterised in that**:
- on each power path, each determined gear ratio is activated by a selective activation means, specific to this gear ratio, combining the function of activation and deactivation of this gear ratio and the function of adaptation of the rotational speeds between the upper shaft and the lower shaft whilst changing the gear ratio; and
- the deactivation of the power path is carried out by bringing simultaneously all selective activation means belonging to this path into the individual deactivation state of all determined gear ratios of this path.

2. A device according to claim 1, **characterised in that** the selective activators are wet multi-disc friction couplings (118a, 218a, 318a; 118b, 218b,318b).

3. A device according to claim 1 or 2, **characterised in that** at least some of the selective activators are brakes (118, 218; 118a, 318a, 118b, 218b) that selectively connect a reaction member to a housing (22) of the transmission device.

4. A device according to one of claims 1 to 3, **characterised in that** each power path (8a, 8b) is kinematically independent and comprises an output unit (11a, 11b) permanently connected to the lower shaft (4).

5. A device according to one of claims 1 to 4, **characterised in that** the two power paths (8a, 8b) are approximately identical and are capable of obtaining between their input unit (9a, 9b) and their output unit (11a, 11b) identical local gear ratios, but are connected to the upper shaft (2) and/or the lower shaft (4) with a different transfer ratio.

6. A device according to one of claims 1 to 5, **characterised in that** each power path (8a, 8b) is capable of a local direct drive gear ratio.

7. A device according to one of claims 1 to 6, **characterised in that** each selective activator can be placed in a neutral state, so that each gear ratio of a power path is obtained by placing a single activator in an activated state, whilst the power path is placed in neutral when all of the selective activators of the power path are in a neutral state.

8. A device according to one of claims 1 to 7, **characterised in that** at least one said power path (8a, 8b) comprised subpaths, each corresponding to a respective local gear ratio, which are mounted mechanically in parallel between the input unit (9a, 9b) and the output unit (11a, 11b).

9. A device according to one of claims 1 to 8, **characterised in that** at least one of the power paths comprises at least one planetary gear train (123a, 223a; 123b, 223b).

10. A device according to one of claims 1 to 8, **characterised in that** at least one (8b) of the power paths comprises first and second planetary gear trains (123b, 223b), respectively comprising:
- first and second planet carriers (124b, 224b), in which the planet pinions are mounted in pairs (128i, 128e; 228i, 228e) in series,
- first and second sun gears (126b, 226b)
- first and second ring gears (127b, 227b),
**in that**:
- the two ring gears (127b, 227b) are attached to the output unit (11b),
- the first planet carrier (124b) and the second sun gear (226b) are attached to the input unit (9b),
and **in that** the selective activators comprise:
- a brake (118b) for the first sun gear (126b),
- a brake (218b) for the second planet carrier (224b),
- a direct drive clutch (318b).

11. A device according to one of claims 1 to 8 or 10, **characterised in that** at least one (8a) of the power paths comprises first and second planetary gear trains (123a, 223a), respectively comprising:
- first and second planet carriers (124a, 224a)
- first and second sun gears (126a, 226a),
- first and second ring gears (127a, 227a),
**in that**:
- the first ring gear (127a) and the second planet carrier (224a) are attached to the output unit (11a),
- the first planet carrier (124a) and the second sun gear (226a) are attached to the input unit (9a),
and **in that** the selective activators comprise:
- a brake (118a) for the second ring gear (227a),
- a brake (318a) for the first sun gear (126a),
- a direct drive clutch (218a).

12. A device according to one of claims 1 to 11, **characterised in that** at least one of the input units (9a) and output units (11a) on each path (8a) is located in an intermediate position between the spatial ends of the path.

13. A device according to one of claims 1 to 11, **characterised in that** the output unit and the input unit on each path are axially adjacent, in particular at one spatial end of the path.

14. A device according to one of claims 1 to 13, **characterised in that** it comprises controls (17) capable of synchronising the gradual placing of a selective activator in a neutral state with the gradual placing of another selective activator in an activated state.

## Patentansprüche

1. Mehrganggetriebevorrichtung zum Verbinden eines Motors mit einer Last, beispielsweise einem Kraftfahrzeug, mit:
- einer stromauf angeordneten Welle (2),
- einer stromab angeordneten Welle (4),
- die über mindestens zwei Kraftwege (8a, 8b) miteinander verbunden sind, von denen wenigstens einer mindestens zwei Übersetzungsverhältnisse definiert und die Übersetzungsverhältnisse von einem Kraftweg zum anderen zwischen der stromauf gelegenen Welle und der stromab gelegenen Welle verschieden sind,
- wobei auf jedem Kraftweg selektive Aktivierungsmittel (18a, 18b; 118a, 218a, 318a, 118b, 218b, 318b) vorgesehen sind, um einzeln jedes vorbestimmte Übersetzungsverhältnis zu aktivieren und zu deaktivieren, und
Mitteln zum Deaktivieren bzgl. der Kraftübertragung mindestens eines Kraftweges, der verschieden ist von dem der das Übertragungsverhältnis definiert, welches zwischen der stromauf gelegenen Welle und der stromab gelegenen Welle existiert, und wobei die Verbindung zwischen der stromauf gelegenen Welle (2) und einem Eingangsorgan (9a, 9b) eines jeden Kraftweges (8a, 8b) permanent ist, **dadurch gekennzeichnet, dass**:
- auf jedem Kraftweg jedes bestimmte Übertragungsverhältnis aktiviert wird durch ein für dieses Verhältnis spezifisches selektives Aktivierungsmittel, welches die Funktion der Aktivierung in der Deaktivierung dieses Verhältnisses und die Funktion der Anpassung der Geschwindigkeiten zwischen der stromauf gelegenen Welle und der stromab gelegenen Welle während Änderungen des Übertragungsverhältnisses zusammen fasst, und
- die Deaktivierung des Kraftweges erfolgt, in dem gleichzeitig die selektiven Aktivierungsmittel, die zu diesem Weg gehören in einen Zustand individueller Deaktivierung von allen bestimmten Übertragungsverhältnissen dieses Weges versetzt werden.

2. Vorrichtung nach Anspruch 1, **dadurch gekennzeichnet, dass** die selektiven Aktivierungsmittel Reibungskupplungsmittel mit mehreren Scheiben im Ölbad (118, 218, 318) sind.

3. Vorrichtung nach Anspruch 1 oder 2, **dadurch gekennzeichnet, dass** mindestens bestimmte der selektiven Aktivierungsmittel Bremsen (118, 218; 118a, 318a, 118b, 218b) sind, die selektiv ein Reaktionsorgan mit einem Gehäuse (22) der Getriebevorrichtung verbinden.

4. Vorrichtung nach einem der Ansprüche 1 bis 3, **dadurch gekennzeichnet, dass** jeder Kraftweg (8a, 8b) kinematrisch unabhängig ist und ein Ausgangsorgan (11a, 11b) aufweist, welches permanent mit der stromab gelegenen Welle (4) verbunden ist.

5. Vorrichtung nach einem der Ansprüche 1 bis 4, **dadurch gekennzeichnet, dass** die zwei Kraftwege (8a, 8b) im wesentlichen identisch sind und zwischen ihren Eingangsorganen (9a, 9b) und ihren Ausgangsorganen (11a, 11b) identische lokale Übersetzungsverhältnisse herstellen können, wobei die Kraftwege jedoch mit der stromauf gelegenen Welle (2) und/oder der stromab gelegenen Welle (4) mit unterschiedlichem Übertragungsverhältnis verbunden sind.

6. Vorrichtung nach einem der Ansprüche 1 bis 5, **dadurch gekennzeichnet, dass** jeder Kraftweg (8a, 8b) ein lokales Übertragungsverhältnis mit Direkteingriff erzeugen kann.

7. Vorrichtung nach einem der Ansprüche 1 bis 6, **dadurch gekennzeichnet, dass** jedes selektive Aktivierungsmittel in eine Totpunktstellung gebracht werden kann, derart, dass jedes Übertragungsverhältnis eines Kraftweges erzeugt wird, in dem ein einzelnes Aktivierungsmittel in einen Aktivierungszustand versetzt wird, während ein Totpunkt des Kraftweges erzeugt wird, während alle selektiven Aktivierungsmittel des Kraftweges sich im Zustand eines Totpunktes befinden.

8. Vorrichtung nach einem der Ansprüche 1 bis 7, **dadurch gekennzeichnet, dass** mindestens ein Kraftweg (8a, 8b) Unterwege aufweist, die jeweils einem lokalen Übersetzungsverhältnis entsprechen und die mechanisch parallel gestaltet angeordnet sind zwischen dem Eingangsorgan (9a, 9b) und dem Ausgangsorgan (11a, 11 ) des Weges.

9. Vorrichtung nach einem der Ansprüche 1 bis 8, **dadurch gekennzeichnet, dass** mindestens einer der Kraftwege mindestens ein Planetengetriebe (123a, 223a; 123b, 223b) aufweist.

10. Vorrichtung nach einem der Ansprüche 1 bis 8, **dadurch gekennzeichnet, dass** mindestens einer (8b) der Kraftwege ein erstes und ein zweites Planetengetriebe (123b, 223b) aufweist, welches jeweils aufweist:
- einen ersten und einen zweiten Satellitenträger (124b, 224b) auf dem die Satelliten in Kaskade paarweise (128i, 128e; 228i, 228e) angeordnet sind,
- ein erstes und ein zweites Planetenrad (126b, 226b),
- ein erstes und ein zweites Kronrad (127b, 227b) und dadurch, dass:
- die beiden Kronräder (127b, 227b) fest mit dem Ausgangsorgan (11b) verbunden sind,
- der erste Satellitenträger (124b) und das zweite Planetenrad (226b) mit dem Eingangsorgan (9b) verbunden sind, und dadurch, dass die selektiven Aktivierungsmittel aufweisen:
- eine Bremse (118b) für das erste Planetenrad (126b),
- eine Bremse (218b) für den zweiten Satellitenträger (224b), und
- eine Direkteingriffskupplung (318b).

11. Vorrichtung nach einem der Ansprüche 1 bis 8 oder 10, **dadurch gekennzeichnet, dass** der mindestens eine Kraftweg (8a) ein erstes und ein zweites Planetengetriebe (123a, 223a) aufweist, die jeweils aufweisen:
- einen ersten und einen zweiten Satellitenträger (124a, 224a),
- ein erstes und ein zweites Planetenrad (126a, 226a),
- ein erstes und ein zweites Kronrad (127a, 227a),
dadurch, dass:
- das erste Kronrad (127a) und der zweite Satellitenträger (224a) fest mit dem Ausgangsorgan (11a) verbunden sind,
- der erste Satellitenträger (124a) und das zweite Planetenrad (226a) fest mit dem Eingangsorgan (9a) verbunden sind,
und dadurch, dass die selektiven Aktivierungsmittel aufweisen:
- eine Bremse (118a) für das zweite Kronrad (227a),
- eine Bremse (318a) für das erste Planetenrad (126a), und
- eine Direkteingriffskupplung (218a).

12. Vorrichtung nach einem der Ansprüche 1 bis 11, **dadurch gekennzeichnet, dass** mindestens eines der Eingangsorgane (9a) und der Ausgangsorgane (11a) jedes Weges (8a) in einer Stellung zwischen den räumlichen Enden des Weges angeordnet sind.

13. Vorrichtung nach einem der Ansprüche 1 bis 11, **dadurch gekennzeichnet, dass** das Ausgangsorgan und das Eingangsorgan eines jeden Kraftweges axial benachbart angeordnet sind, insbesondere an einem räumlichen Ende des Weges.

14. Vorrichtung nach einem der Ansprüche 1 bis 13, **gekennzeichnet durch** Steuermittel (17) welches in der Lage ist, den progressiven Eingriff eines selektiven Aktivierungsmittels im Totpunktzustand mit dem progressiven Eingriff eines anderen selektiven Aktivierungsmittels, welches sich im aktiven Zustand befindet, zu synchronisieren.
